(19) Europäisches Patentamt

European Patent Office

Office européen des brevets

(11) Veröffentlichungsnummer: **0 685 706 A1**

# (12) EUROPÄISCHE PATENTANMELDUNG

(21) Anmeldenummer: **95106907.9**

(22) Anmeldetag: **08.05.95**

(51) Int. Cl.[6]: **G01D 3/02**

(30) Priorität: **03.06.94 DE 4419364**

(43) Veröffentlichungstag der Anmeldung:
**06.12.95 Patentblatt 95/49**

(84) Benannte Vertragsstaaten:
**CH DE GB LI SE**

(71) Anmelder: **ROBERT BOSCH GMBH**
**Postfach 30 02 20**
**D-70442 Stuttgart (DE)**

(72) Erfinder: **Senn, Rolf**
**Mostel-Süd**
**CH-6417 Sattel (CH)**
Erfinder: **Cochard, Roland**
**Av. A.-André 7**
**CH-1110 Morges (CH)**
Erfinder: **Pidoux, Raymond**
**Ch. des Vignes**
**CH-1134 Vufflens-le-Château (CH)**

(54) **Verfahren zur Echtzeitermittlung des Offsetanteils eines Messsignales.**

(57) Es wird ein Verfahren vorgeschlagen, das zur Echtzeitermittlung des Offsetanteils eines Meßsignales dient. Das Meßsignal wird in festgelegten Zeitabständen in Form digitaler Meßwerte ermittelt. Die Meßwerte werden über eine festgelegte Zeitdauer in einem Histogramm abgespeichert. Ein in der festgelegten Zeitdauer am häufigsten gemessener Meßwertebereich wird als Offsetanteil des Meßsignales ermittelt.

Fig. 1

EP 0 685 706 A1

## Stand der Technik

Aus der französischen Patentschrift FR- 76 24759 ist es bekannt, ein Signal aus einem verrauschten Meßsignal nach einer vorgegebenen Frequenz herauszufiltern und somit das Signal von einem Hintergrundrauschen zu trennen. Dazu wird das Meßsignal mit einem Synchronsignal mit der vorgegebenen Frequenz und mit einer vorgegebenen Amplitude multipliziert und anschließend einer Tiefpaßfilterung unterzogen.

Das gefilterte Signal ist proportional der Amplitude des Meßsignales mit der vorgegebenen Frequenz des Synchronsignales und proportional der Amplitude des Synchronsignales. Dieses Verfahren ist verhältnismäßig aufwendig, da eine Multiplikation mit einem Synchronsignal erfolgt.

Zudem ist nur eine Ermittlung eines Signales mit einer vorgebenen Frequenz möglich. Eine einfache Auftrennung eines Meßsignales in einen Offsetanteil und einen Meßsignalanteil ist nicht möglich.

## Vorteile der Erfindung

Das erfindungsgemäße Verfahren mit den Merkmalen des Hauptanspruchs hat demgegenüber den Vorteil, daß der Offsetanteil eines Meßsignales ermittelbar ist, obwohl sich die Meßsignale statistisch verteilt auf der einen oder der anderen Seite des Offsetwertes befinden. Zudem kann die Amplitude der Meßsignale statistisch variieren und der Offsetanteil des Meßsignales wird trotzdem sicher ermittelt. Mit diesem Verfahren ist eine präzise Festlegung einer Schwelle für ein vom Offsetanteil befreites Meßsignal möglich. Dadurch ist eine präzise Amplitudenselektierung gegeben.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, den Offsetanteil eines Meßsignales mittels eines zeitgleitenden Histogramms zu ermitteln. Dadurch ist es möglich, daß der ermittelte Offsetanteil des Meßsignales schnell an zeitliche Änderungen des Meßsignales angepaßt wird und korrekt ermittelt wird.

Die Ausbildung des verwendeten Speichers als Ringspeicher eignet sich für das verwendete Verfahren besonders, da damit eine gleitende Speicherung der Meßwerte und eine Verwaltung der Meßwerte auf einfache Weise ermöglicht wird.

In vorteilhafter Weise entspricht die Anzahl der Speicherplätze im Ringspeicher der Anzahl der Meßwerte, die für die Ermittlung des Offsetanteils des Meßsignals eingelesen werden. Damit wird die Verwaltung der Speicheradressen vereinfacht. Ein bevorzugtes Verfahren zur Ermittlung der Histogrammklasse mit dem größten Inhalt besteht darin, die Histogrammklassen mit einem vorgegebenen Wert zu vergleichen und den Inhalt der Histogrammklasse, der größer ist als der vorgegebene Wert, als neuen Wert zu übernehmen und die Histogrammklasse abzuspeichern. Damit wird schnell und einfach die Histogrammklasse mit dem größten Inhalt ermittelt.

## Zeichnung

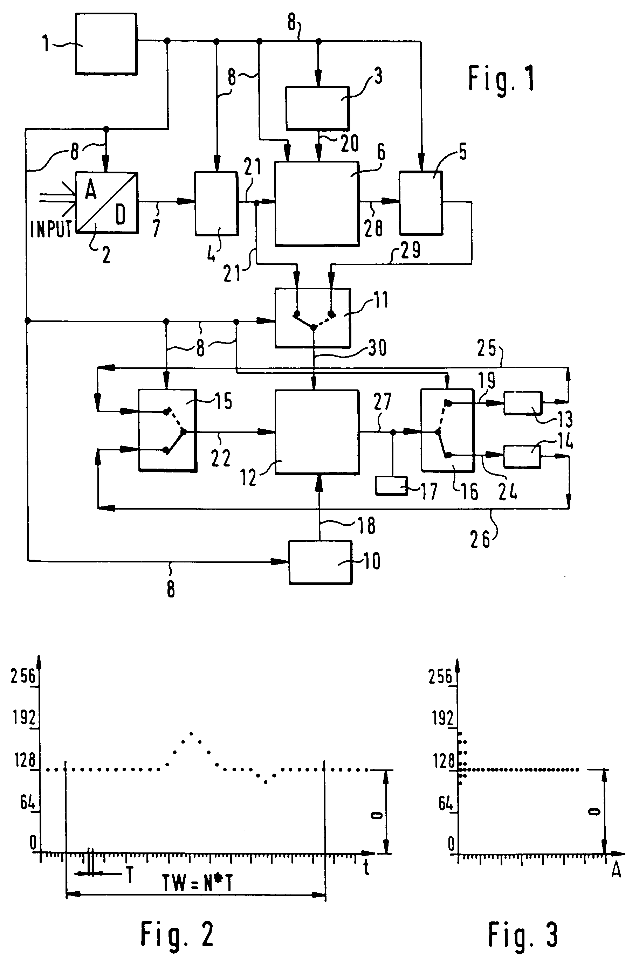

Ein Ausführungsbeispiel der Erfindung ist in der Zeichnung dargestellt und in der nachfolgenden Beschreibung näher erläutert. Es zeigen Figur 1 eine Anordnung zur Abspeicherung der Meßwerte, Figur 2 ein Meßsignal, das über die Zeit aufgetragen ist und Figur 3 das Meßsignal der Figur 2 in Form von Histogrammklassen.

## Beschreibung des Ausführungsbeipiels

Figur 1 zeigt eine Anordnung zur Ermittlung des Offsetanteils eines Meßwertsignales. Ein Taktgeber 1 ist über Taktleitungen 8 mit einem Adresszähler 3, mit einem Analog/Digital-Wandler 2, mit einem ersten Register 4, mit einem Ringspeicher 6, mit einem zweiten Register 5, mit einem ersten Multiplexer 11, mit einem zweiten Multiplexer 15, mit einem dritten Multiplexer 16 und mit einem Taktverdoppler 10 verbunden. Der Analog/Digital-Wandler 2 ist mit einer ersten Datenleitung 7 mit dem ersten Register 4 verbunden.

Der Ausgang des ersten Registers 4 steht über eine erste Registerleitung 21 mit dem Dateneingang des Ringspeichers 6 und mit einem ersten Eingang des ersten Multiplexers 11 in Verbindung. Der Ringspeicher 6 ist über eine Adreßleitung 20 mit dem Adresszähler 3 und über einen Datenausgang über eine zweite Datenleitung 28 mit dem zweiten Register 5 verbunden. Das zweite Register 5 ist mit einem Datenausgang über eine dritte Datenleitung 29 mit dem zweiten Eingang des ersten Multiplexers 11 verbunden. Der erste Multiplexer 11 ist über eine vierte Datenleitung 30 mit einem Adresseingang eines Histogrammspeichers 12 verbunden. Dem Histogrammspeicher 12 wird über eine weitere Taktleitung 18 vom Taktverdoppler 10 die doppelte Taktfrequenz des Taktgebers 1 zugeführt. Der zweite Multiplexer 15 ist über eine weitere Eingangsleitung 22 mit dem Dateneingang des Histogrammspeichers 12 verbunden. Der Datenausgang des Histogramspeichers 12 ist über eine Ausgangsleitung 22 mit einem dritten Multiplexer 16 verbunden.

Der dritte Multiplexer 16 ist über eine erste Addierleitung 19 mit einem ersten Inkrementzähler 13 und über eine zweite Addierleitung 24 mit einem zweiten Inkrementzähler 14 verbunden. Der erste Inkrementzähler 13 ist über eine erste Inkrementleitung 25 mit einem ersten Eingang des zweiten Multiplexers 15 verbunden. Der zweite Inkrementzähler 14 ist über eine zweite Inkrementleitung 26 mit einem zweiten Eingang des zweiten Multiplexers 15 verbunden. Der Datenausgang des Histogrammspeichers 12 ist über die Ausgangsleitung 27 mit einer Recheneinheit 17 mit Speicher verbunden.

Die Funktionsweise der Anordnung der Figur 1 wird im folgenden erläutert. Das Meßsignal wird dem A/D-Wandler 2 zugeführt und entsprechend dem Abtasttakt, der vom Taktgeber 1 zugeführt wird, in Meßwerte digitalisiert und an das erste Register 4 übergeben. Das erste Register 4 gibt im Abtasttakt die Meßwerte an den Dateneingang des Ringspeichers 6 und an den ersten Eingang des ersten Multiplexers 11.

Der Adresszähler 3 legt entsprechend dem zugeführten Takt die Adresse des Ringspeichers 6 fest, aus der ein abgespeicherter Meßwert ausgelesen wird bzw. in die der Meßwert vom Register 4 eingelesen wird. Dabei springt der Adresszähler 3 bei jeder abfallenden Flanke des vom Taktgeber 1 zugeführten Taktsignales von einer Adresse zur nächsten Adresse. Der Ringspeicher 6 gibt bei jedem Low-Signal des Taktsignales den Inhalt der Speicheradresse, die vom Adresszähler 3 bestimmt ist, an das zweite Register 5 aus. Zudem liest der Ringspeicher 6 in jedem High-Signal des vom Taktgeber 1 zugeführten Taktsignales am Dateneingang einen vom ersten Register 4 zugeführten Meßwert in die vom Adresszähler 3 bestimmte Speicheradresse. Das zweite Register 5 gibt in jedem Zeittakt einen Meßwert an den zweiten Eingang des ersten Multiplexers 11.

Dem ersten Multiplexer 11 werden abwechselnd der bisher an der bestimmten Speicheradresse abgelegte Meßwert und der neu in diese Speicheradresse eingelesene Meßwert zugeführt.

Ist die Anzahl der Speicherplätze im Ringspeicher 6 größer als die Anzahl der abzuspeichernden Meßwerte, so wird der Meßwert ausgelesen, der zeitlich am längsten im Ringspeicher 6 abgespeichert ist. In diesem Fall stimmt die Speicheradresse des auszulesenden Meßwertes mit der Speicheradresse des neu einzulesenden Meßwertes nicht überein. Dies ist entsprechend bei der Steuerung des Adreßzählers 3 zu berücksichtigen.

Der Histogrammspeicher 12 arbeitet im Vergleich zum Taktgeber 1 mit doppeltem Zeittakt, da pro Zeittakt T an den Histogrammspeicher 12 von dem ersten Multiplexer 11 zwei Meßwerte - der neue Meßwert, der an einer Speicheradresse des Ringspeichers 6 abgelegt wird und der bisher an dieser Speicheradresse abgelegte Meßwert bzw. der am längsten abgespeicherte Meßwert - zugeführt werden. Gibt nun der erste Multiplexer 11 einen neu eingelesenen Meßwert über die vierte Datenleitung 30 an den Histogrammspeicher 12 weiter, so wird die Histogrammklasse ermittelt, in die der neu eingelesene Meßwert fällt. Der Histogrammspeicher 12 gibt nun über die Ausgangsleitung 27 ein Signal an den dritten Multiplexer 16, der daraufhin den zweiten Inkrementzähler 14 aktiviert. Der zweite Inkrementzähler 14 gibt einen positiven festgelegten Wert, in diesem Fall +1, an den ersten Multiplexer 15, der diesen Wert zu dem Inhalt der Histogrammklasse, in die der neu eingelesene Meßwert fällt, addiert.

Wird über den ersten Multiplexer 11 dem Histogrammspeicher 12 ein bisher im Ringspeicher 6 abgespeicherter Meßwert zugeführt, so gibt der Histogrammspeicher 12 ein Signal an den dritten Multiplexer 16, der ein Signal an den ersten Inkrementzähler 13 gibt. Der erste Inkrementzähler 13 gibt einen festgelegten negativen Wert, in diesem Fall -1, an den zweiten Multiplexer 15, der diesen festgelegten Wert zu der Histogrammklasse des Histogrammspeichers 12 addiert, in die der bisher abgespeicherte Meßwert fällt.

Somit wird für jeden neu gemessenen Meßwert die Histogrammklasse des neu gemessenen Meßwertes um einen festgelegten Wert erhöht und die Histogrammklasse des bisher an der Speicheradresse des Ringspeichers 6 abgelegten Meßwertes, bzw. des am längsten abgespeicherten Meßwertes, um einen festgelegten Wert erniedrigt.

Figur 2 zeigt den Zustand des Histogrammspeichers 12 in Abhängigkeit von der Zeit in Form eines Meßwertediagrammes, bei dem die Meßwerte in Amplitudenklassen gegen die Zeit t aufgetragen sind. Die Meßwerte sind in festgelegten Zeitabständen T aufgenommen. In der Figur 2 ist der Meßwert, der der Amplitudenklasse 128 entspricht und der in dem gewählten Beispiel am häufigsten vorkommt, als Offsetanteil des Meßsignales angegeben.

Figur 3 zeigt den Zustand des Histogrammspeichers 12 zu einem festgelegten Zeitpunkt TW. Das Meßsignal der Figur 2, das innerhalb einer festgelegten Anzahl N der Zeitabstände T aufgenommen wurde, ist in Form eines Histogrammes dargestellt. Bei Histogrammen ist der Meßwertebereich in Histogrammklassen aufgeteilt. So ist der Meßwertebereich eines Meßsignales in festgelegte Teilbereiche eingeteilt und jedem Teilbereich ist eine Amplitudenklasse zugeordnet. Bei einem Histogramm wird die Anzahl A der Meßsignale ermittelt, die für einen festgelegten Zeitraum bzw. für eine festgelegte Anzahl von Meßwerten in festgelegte Teilbereiche d.h. in Histogrammklassen fallen. In Figur 3 ist die Anzahl A der Meßereignisse gegen die Histogrammklassen, d.h. Amplitudenklassen, aufgetrtagen. Figur 3 zeigt, daß das in Figur 2 über den Zeitraum TW = N*T aufgenomme-

ne Meßsignal eine besonders hohe Anzahl A an Meßwerten, d.h.. Meßereignissen, in der Amplitudenklasse 128 aufweist. Somit ist die Amplitudenklasse 128, die die größte Anzahl A an Meßwerten aufweist, als Offsetanteil des Meßsignales ermittelbar.

Von der Recheneinheit 17 mit Speicher, die nach dem Prinzip eines Spitzenwertdetektors arbeitet, wird die Histogrammklasse mit dem maximalen Wert ermittelt. Dabei liest die Speichereinheit 17 den Wert jeder Histogrammklasse des Histogrammspeichers 12 ein und vergleicht diesen mit einem in dem Speicher abgelegten Wert. Als abgelegter Wert wird z.B. +1 verwendet. Ist der neu eingelesene Wert der Histogrammklasse kleiner oder gleich dem im Speicher abgelegten Wert, so bleibt der Wert im Speichers erhalten. Ist der neu eingelesene Wert größer als der Wert, der im Speicher abgelegt ist, so wird der neue Wert in den Speicher übertragen und die Histogrammklasse des neu eingelesenen Wertes im Speicher abgelegt. Dieses Verfahren wird für alle Histogrammklassen durchgeführt.

Der zuletzt im Speicher abgelegte Wert ist somit der maximale Wert einer Histogrammklasse. Die Histogrammklasse mit dem maximalen Wert wird im Speicher abgelegt. Diese Histogrammklasse stellt den Offsetanteil des Meßsignales dar. Der Ringspeicher 6 weist eine festgelegte Anzahl N an Speicheradressen auf. Damit weist die Speicherung ein Fenster mit der zeitlichen Ausdehnung von WT = N*T auf, wobei T der Zeittakt des Taktgebers 1 ist. Die Wahl der Länge des Zeitfensters gestattet es, die Ermittlung des Offsetsignales an die Charakteristik des Meßsignales anzupassen.

Da der Histogrammspeicher 12 gleitend ausgelegt ist, paßt sich die Werteverteilung der Histogrammklassen schnell an ein sich änderndes Meßsignal an. Anstelle des Ringspeichers 6 kann auch ein Speicher mit wahlfreiem Zugriff angeordnet werden.
Zur Verbesserung der Offsetermittlung werden die im Histogramm abgelegten Werte, d.h. die Anzahl der gemessenen Meßsignale in einer Histogrammklasse einer Glättung unterzogen. Dadurch werden Verfälschungen des Offsetsignales vermindert.

**Patentansprüche**

1. Verfahren zur Echtzeitermittlung des Offsetanteils eines Meßsignales, das in Form von zeitlich aufeinander folgenden digitalen Meßwerten vorliegt, wobei eine festgelegte Anzahl von Meßwerten ausgewählt wird und in einem Speicher abgelegt wird, dadurch gekennzeichnet,
daß der Meßwertebereich des Meßsignales in Teilbereiche eingeteilt wird, daß die ausgewählten Meßwerte den Teilbereichen zugeordnet werden, und daß der Teilbereich, dem die meisten Meßwerte zugeordnet wurden, als Offsetanteil des Meßsignales erkannt wird.

2. Verfahren nach Anspruch 1, dadurch gekennzeichnet, daß für jeden Teilbereich in einem Histogramm eine Histogrammklasse angeordnet ist, daß für jeden abgespeicherten Meßwert in dem Histogramm die Histogrammklasse, die dem Wert des Meßwertes entspricht, um einen festgelegten Wert erhöht wird, daß für jeden abgespeicherten Meßwert der Meßwert, der zeitlich am längsten im Speicher abgelegt ist, ausgelesen wird und die Histogrammklasse, die den Wert des ausgelesenen Meßwertes beinhaltet, um einen festgelegten Wert erniedrigt wird, und daß die Histogrammklasse mit dem größten Inhalt als Offsetanteil des Meßsignales erkannt wird.

3. Verfahren nach einem der Ansprüche 1 oder 2, dadurch gekennzeichnet, daß zur Zwischenspeicherung der Meßwerte ein Ringspeicher (6) verwendet wird, und daß die Meßwerte an aufeinander folgenden Speicheradressen des Ringspeichers (6) abgelegt werden.

4. Verfahren nach Anspruch 2, dadurch gekennzeichnet, daß die Anzahl der Speicherplätze des Ringspeichers (6) der festgelegten Anzahl von Meßwerten entspricht, die für die Ermittlung des Offsetanteils des Meßsignales eingelesen werden.

5. Verfahren nach einem der Ansprüche 2 bis 4, dadurch gekennzeichnet,
daß zur Ermittlung der Histogrammklasse mit dem größten Inhalt der Inhalt jeder Histogrammklasse mit einem vorgegebenen, abgelegten Wert verglichen wird, und daß der Inhalt der Histogrammklasse als neuer Wert übernommen wird und die Histogrammklasse gespeichert wird, wenn der Inhalt der Histogrammklasse größer als der vorgegebene Wert ist.

Fig. 1

Fig. 2

Fig. 3

Europäisches
Patentamt

**EUROPÄISCHER RECHERCHENBERICHT**

Nummer der Anmeldung

EP 95 10 6907

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | PATENT ABSTRACTS OF JAPAN vol. 13 no. 301 (E-785) ,11.Juli 1989 & JP-A-01 078525 (FUJI PHOTO FILM CO LTD) 24.März 1989, * Zusammenfassung * --- | 1-5 | G01D3/02 |
| Y | EP-A-0 017 991 (SIEMENS AKTIENGESELLSCHAFT) * Zusammenfassung * --- | 1-5 | |
| A | PATENT ABSTRACTS OF JAPAN vol. 18 no. 219 (C-1192) ,20.April 1994 & JP-A-06 014909 (YOKOGAWA MEDICAL SYST LTD) 25.Januar 1994, * Zusammenfassung * ----- | 1 | |
| | | | RECHERCHIERTE SACHGEBIETE (Int.Cl.6) |
| | | | G01D |

Der vorliegende Recherchenbericht wurde für alle Patentansprüche erstellt

| Recherchenort | Abschlußdatum der Recherche | Prüfer |
|---|---|---|
| DEN HAAG | 12.September 1995 | Lut, K |